# EUROPEAN PATENT APPLICATION

(11) **EP 4 738 114 A1**
(43) Date of publication of application: **06.05.2026**
(21) Application number: 24872813.1
(22) Date of filing: 13.09.2024
(51) Int. Cl.: G06F 9/48, G06F 9/50, G06F 9/52

(54) **ELECTRONIC DEVICE AND METHOD FOR RESOURCE MANAGEMENT**

(30) Priority: 27.09.2023 KR 20230131129
(71) Applicant: Samsung Electronics Co., Ltd., Suwon-si, Gyeonggi-do 16677 (KR)
(72) Inventor: KANG, Kyungmin, Suwon-si Gyeonggi-do 16677 (KR); KIM, Iksoon, Suwon-si Gyeonggi-do 16677 (KR); CHAE, Changhyeon, Suwon-si Gyeonggi-do 16677 (KR); CHOI, Youngho, Suwon-si Gyeonggi-do 16677 (KR); KANG, Byungkwon, Suwon-si Gyeonggi-do 16677 (KR)
(74) Representative: Appleyard Lees IP LLP
(86) International application number: PCT/KR2024/014037
(87) International publication number: WO 2025/071105

(57) **Abstract**

An electronic device according to an embodiment of the disclosure may, in response to execution of an application being requested, identify at least one service associated with the application, determine a first scheduling policy and a second scheduling policy to be applied to at least one process associated with the at least one service, apply the first scheduling policy corresponding to a higher scheduling priority, of the first scheduling policy and the second scheduling policy, to the at least one process, and release the first scheduling policy and apply the second scheduling policy to the at least one process in response to generation of an application process executing the application.

## Description

### BACKGROUND

### [Technical Field]

The disclosure relates to an electronic device and method for managing resources.

### [Background Art]

As technology develops and advances, electronic devices may provide various functions in addition to existing functions. For example, a television (TV) may not only display broadcasting channels but may also provide functions (or capabilities) to execute applications, access websites, or communicate with other electronic devices.

A user may turn on the TV and run an application. For example, after the TV is turned on, an application that provides over-the-top (OTT) services by entering keys on the remote control may be executed. The execution of an application based on the user's key input may be performed at varying speeds (e.g., quickly or slowly) based on the booting performance for displaying the first screen when the TV is turned on and the execution performance of the application.

### [Disclosure]

### [Technical Problem]

Generally, in an electronic device, as the booting performance for displaying the first screen when the TV is turned on increases, the execution performance of the application may decrease, and conversely, as the booting performance decreases, the execution performance of the application may increase. Therefore, there is a need for a method for increasing application execution performance while maintaining booting performance.

Meanwhile, if resource management is not performed properly in the electronic device, central processing unit (CPU) contention or priority inversion may occur between processes associated with the application. CPU contention refers to competing for CPU resources between processes, and priority inversion refers to a situation in which the execution of a low-priority process is delayed, resulting in a delay in the execution of the associated high-priority process. CPU contention and priority inversion may delay application execution. Therefore, there is a need for resource management technology that may execute applications more quickly while preventing/reducing the above issues.

### [Technical Solution]

An embodiment of the disclosure may provide an electronic device and method for managing resources.

An embodiment of the disclosure may provide an electronic device and method that may more quickly execute an application selected by the user after cold booting.

An embodiment of the disclosure may provide an electronic device and method that may enhance CPU contention or priority inversion.

An electronic device according to an example embodiment of the disclosure may comprise: memory storing at least one program and at least one processor, comprising processing circuitry, electrically connected to the memory and configured to execute at least one instruction of a program stored in the memory. At least one processor may, individually and/or collectively, be configured to: in response to execution of an application being requested, identify at least one service associated with the application, determine a first scheduling policy and a second scheduling policy to be applied to at least one process associated with the at least one service, apply the first scheduling policy corresponding to a higher scheduling priority, of the first scheduling policy and the second scheduling policy, to the at least one process, and, in response to generation of an application process executing the application, release the first scheduling policy and applies the second scheduling policy to the at least one process.

According to an example embodiment, the first scheduling policy may include a policy preferentially allocating a first resource to the at least one process. The second scheduling policy may include a policy allocating a second resource to the at least one process based on a set resource allocation ratio. The set resource allocation ratio may correspond to at least one control group including the at least one process among a plurality of control groups.

According to an example embodiment, at least one processor, individually and/or collectively, may be configured to:, in response to the generation of the application process, apply the first scheduling policy to the application process and, in response to a lapse of a set time from a time when the first scheduling policy is applied to the application process, release the first scheduling policy applied to the application process and apply the second scheduling policy to the application process.

According to an example embodiment, at least one processor, individually and/or collectively, may be configured to: in response to a need for communication between processes at a predetermined time, identify a first process including a communication request process among the processes, and a second process including a communication response process among the processes, compare a first scheduling priority of the first process with a second scheduling priority of the second process, and inherit the first scheduling priority to the second process in response to the first scheduling priority being higher than the second scheduling priority.

According to an example embodiment, the first process may correspond to the application process. The second process may correspond to any one of the at least one process.

According to an example embodiment, at least one processor, individually and/or collectively, may be configured to determine whether a set time elapses from a time when the first scheduling priority is inherited to the second process and release the inheritance of the first scheduling priority for the second process in response to the lapse of the set time.

According to an example embodiment, the first scheduling priority may be determined to preferentially allocate a first resource to the first process based on the first scheduling policy. The second scheduling priority may be determined to allocate a second resource corresponding to a set resource allocation ratio to the second process based on the second scheduling policy.

According to an example embodiment, the second process may be registered as a priority inheritance target process.

According to an example embodiment, at least one processor, individually and/or collectively, may be configured to: in response to identifying a plurality of the first processes, identify a third scheduling priority corresponding to a highest priority among respective scheduling priorities of the first processes, compare the third scheduling priority with the second scheduling priority of the second process, and inherit the third scheduling priority to the second process in response to the third scheduling priority being higher than the second scheduling priority.

A method according to an example embodiment of the disclosure may comprise,: in response to execution of an application being requested, identifying at least one service associated with the application, determining a first scheduling policy and a second scheduling policy to be applied to at least one process associated with the at least one service, applying the first scheduling policy corresponding to a higher scheduling priority, of the first scheduling policy and the second scheduling policy, to the at least one process, and, in response to generation of an application process executing the application, releasing the first scheduling policy and applying the second scheduling policy to the at least one process.

According to an example embodiment, the first scheduling policy may include a policy preferentially allocating a first resource to the at least one process. The second scheduling policy may include a policy allocating a second resource to the at least one process based on a set resource allocation ratio. The set resource allocation ratio may correspond to at least one control group including the at least one process among a plurality of control groups.

According to an example embodiment, the method may further comprise: in response to the generation of the application process, applying the first scheduling policy to the application process and releasing the first scheduling policy applied to the application process and applying the second scheduling policy to the application process in response to a lapse of a set time from a time when the first scheduling policy is applied to the application process.

According to an example embodiment, the method may further comprise: in response to a need for communication between processes at a predetermined time, identifying a first process, including a communication request process among the processes, and a second process, including a communication response process among the processes, comparing a first scheduling priority of the first process with a second scheduling priority of the second process, and inheriting the first scheduling priority to the second process in response to the first scheduling priority being higher than the second scheduling priority.

According to an example embodiment, the first process may correspond to the application process. The second process may correspond to any one of the at least one process.

According to an example embodiment, the method may further comprise determining whether a set time elapses from a time when the first scheduling priority is inherited to the second process and releasing the inheritance of the first scheduling priority for the second process in response to the lapse of the set time.

According to an example embodiment, the first scheduling priority may be determined to preferentially allocate a first resource to the first process based on the first scheduling policy. The second scheduling priority may be determined to allocate a second resource corresponding to a set resource allocation ratio to the second process based on the second scheduling policy.

According to an example embodiment, the second process may be registered as a priority inheritance target process.

According to an example embodiment, the method may further comprise: in response to identifying a plurality of the first processes, identifying a third scheduling priority corresponding to a highest priority among respective scheduling priorities of the first processes, comparing the third scheduling priority with the second scheduling priority of the second process, and inheriting the third scheduling priority to the second process in response to the third scheduling priority being higher than the second scheduling priority.

The technical aspects of the disclosure are not limited to the foregoing, and other technical aspects may be derived by one of ordinary skill in the art from example embodiments of the disclosure.

### [Description of Drawings]

The above and other aspects, features, and advantages of certain embodiments of the present disclosure will be more apparent from the following detailed description, taken in conjunction with the accompanying drawings, in which:
FIG. 1 is a graph illustrating an example relationship between a booting performance of an electronic device and an application execution performance according to an embodiment.
FIG. 2 is a graph illustrating an example task processing delay caused due to CPU contention according to an embodiment.
FIG. 3 is a diagram illustrating an example in which priority inversion occurs between processes according to an embodiment.
FIG. 4 is a graph illustrating an example context switch latency that may occur according to a scheduling scheme according to an embodiment.
FIG. 5 is a signal flow diagram illustrating an example execution process of an application in an electronic device according to an embodiment.
FIG. 6 is a diagram illustrating an example system structure for managing CPU resources of an electronic device, according to an embodiment.
FIG. 7 is a diagram illustrating an example priority inheritance operation between processes according to an embodiment.
FIG. 8 is a graph illustrating an example in which a nested boosting operation is performed, according to an embodiment.
FIG. 9 is a graph illustrating an example in which a nested boosting operation is performed according to an embodiment.
FIG. 10 is a flowchart illustrating an example resource management operation of an electronic device according to an embodiment.
FIG. 11 is a flowchart illustrating an example nested boosting operation applied to an application process according to an embodiment.
FIG. 12 is a flowchart illustrating an example priority inheritance operation between a first process and a second process according to an embodiment.
FIG. 13 is a flowchart illustrating an example operation of releasing priority inheritance between a first process and a second process according to an embodiment.
FIG. 14 is a flowchart illustrating an example priority inheritance operation between a plurality of first processes and a second process according to an embodiment.
FIG. 15 is a block diagram illustrating an example configuration of an electronic device according to an embodiment.
FIG. 16 is a graph illustrating an example execution performance of application A according to an embodiment.
FIG. 17 is a graph illustrating an example execution performance of application B according to an embodiment.
FIG. 18 is a graph illustrating an example booting performance and an application execution performance according to an embodiment.

The same or similar reference denotations may be used to refer to the same or similar elements throughout the disclosure and the drawings.

### [Mode for Invention]

Various example embodiments of the disclosure are now described in greater detail with reference to the accompanying drawings. However, the disclosure may be implemented in other various forms and is not limited to the various example embodiments set forth herein. Further, for clarity and brevity, description of well-known functions and configurations may be omitted in the drawings and relevant descriptions.

An electronic device (e.g., TV) may execute an application selected by a user after cold booting. Cold booting (or a cold boot) may refer, for example, to the electronic device being driven after powered on is powered off and then back on to boot.

In order to enhance the booting performance of the electronic device, a Suspend-to-random access memory (RAM) technology may be used. Suspend-to-RAM technology may refer to a technology for storing information (e.g., system information) in RAM immediately before the electronic device is powered off, and maintaining the stored information in RAM with a certain current (e.g., a low current below a threshold). If the electronic device is powered off and then powered on, the electronic device may quickly display an initial screen (e.g., a home screen) of the electronic device using the information stored in the RAM immediately before the electronic device was powered off based on the Suspend-to-RAM technology.

If the Suspend-to-RAM technology is used in the electronic device, the booting time may be reduced, and the execution of the application may be prevented and/or reduced from being delayed due to the power on/off time. However, if the user physically (or manually) turns off the power of the electronic device, such as unplugging the power cord, or if the electronic device is a mobile electronic device with a battery, the information stored in RAM may not be maintained, thus not allowing the Suspend-to-RAM technology to be used.

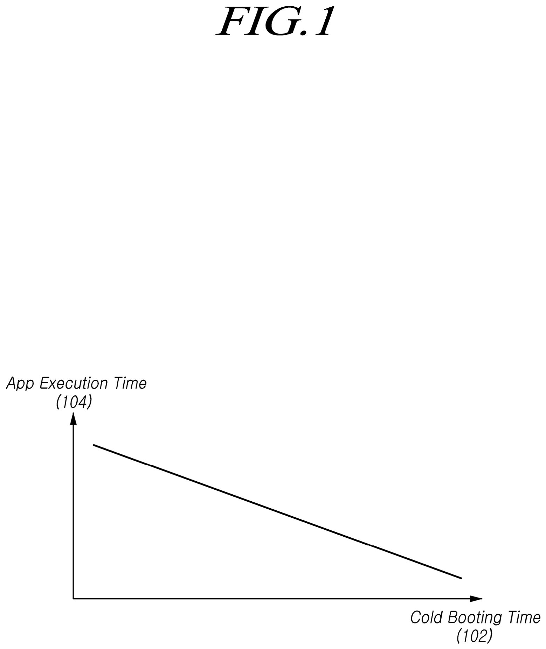

After taking into account the booting performance and the application execution performance, the electronic device may quickly execute an application selected by the user after a cold boot. The booting performance and the application execution performance may have a relationship as shown in FIG. 1, for example.

FIG. 1 is a graph illustrating an example relationship between a booting performance of an electronic device and an application execution performance according to an embodiment.

Referring to FIG. 1, a booting performance may be associated with a cold booting time 102, and an application execution performance may be associated with an application execution time 104. The cold booting time 102 may be identified as a time from when power is applied (e.g., supplied) to the electronic device (or when the power is turned on) to the time when the booting process is completed and the screen is first displayed. The application execution time 104 may be identified as a time from when the user's input, related to application execution, is received to the time when the application is executed.

As shown in FIG. 1, a shorter cold booting time 102 may be correlated with a longer app execution time 104 , and a longer cold booting time 102 may be correlated with a shorter app execution time 104. For example, if the cold boot time 102 decreases, the app execution time 104 may increase due to the failure to complete the operating system (OS) initialization (or system initialization). For example, if the cold boot time 102 increases, the application execution time 104 may decrease because the OS initialization is completed or performed more number of times. Accordingly, the booting performance based on the cold booting time 102 and the application execution time 104, may have a trade-off (e.g., complementary) relationship. Considering such a relationship, an electronic device may require a resource management technology capable of satisfying both the booting performance and the application execution performance.

The electronic device may perform scheduling (e.g., scheduling operation) for resource management so as to allocate resources to an application to-be-executed and to at least one service. According to an example, at least one service may be associated with the application to be executed and the resource may include the CPU resource. Hereinafter, for convenience and simplicity, descriptions will be made with respect to the resource being a CPU resource. However, the resource is not limited to the CPU resource and may include other types of resources (e.g., memory).

If sufficient CPU resources are not allocated to the application to be executed and at least one service, a CPU contention or a priority inversion may occur between processes associated with the application. CPU contention and priority inversion may cause delays in application execution.

The CPU contention may refer to a CPU resource contention in which a plurality of processes (or threads) compete to occupy CPU resources. The CPU contention may occur if a plurality of processes are not allocated enough CPU resources as necessary. A process in which the CPU contention fails so that no resource is allocated may have to wait until a CPU resource is allocated. In this case, the task processing of the process may be delayed.

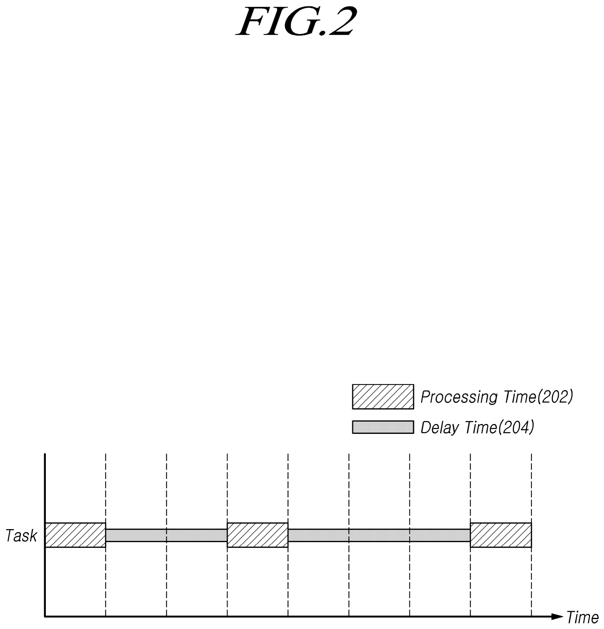

FIG. 2 is a graph illustrating an example task processing delay caused due to CPU contention, according to an embodiment.

Referring to FIG. 2, if a process failed to have a resource allocated in (or from) the CPU contention, the process may experience a time delay in processing a task. For example, if a task associated with the process has a processing time (or operation time) 202 of three (3) seconds but waits five (5) seconds until resources are allocated ifrom the CPU contention, the processing of the task may be completed in or after eight (8) seconds. In other words, the task which takes eight (8) seconds to complete may be delayed by a delay time 204 of five (5) seconds. Delay in processing a task may cause inconvenience as well as negative experience to the user. For example, if the task is related to the key input processing of the TV remote control, the user may experience inconvenience due to delay or lag in the response of the key input of the TV remote control.

The application requested to be executed by the user may operate to provide fast screen display. The application process, executing the application, may not be able to perform (or process) all functions by itself. In this case, the application process may request a function necessary for a service process associated with at least one service. For example, the application process may request time information from the timer process or screen display information from the alignment process. Communication between such processes may be performed through inter-process communication (IPC).

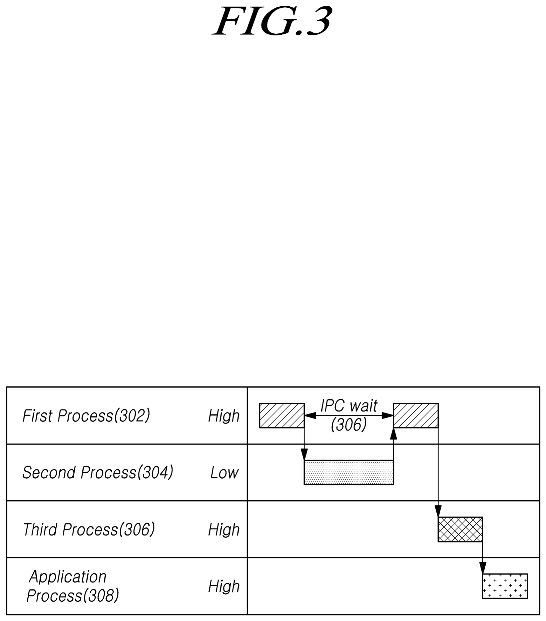

For fast application execution, boosting (e.g., allocating higher priority for resource preemption) may be applied to the application process to prevent and/or reduce delay. On the other hand, because the boosting is not applied to a service process (e.g., timers or alignment process) that communicate with the application process, delay may occur. In other words, since the service process has a lower priority than the application process, certain task(s), associated with the service process, requested by the application may not be performed due to insufficient (or inefficient) allocation of CPU resources. As a result, if the task of the service process is not performed, the operation of the application process may also be delayed (e.g., need to wait until the competition of the task of the service process). Such a situation may be denoted or referred to as priority inversion. In other words, the priority inversion may indicate a situation in which the operation of a higher priority process (e.g., the application process) is delayed by a lower priority process (e.g., the service process). In other words, even though the application process has a higher priority process than that of the service process, as a result of insufficient allocation of CPU resources, the application process may not be processed until the tasks associated with the service process is completed, thereby causing delay. Another example in which the priority inversion occurs between service processes is described in greater detail below with reference to FIG. 3.

FIG. 3 is a diagram illustrating an example in which priority inversion occurs between service processes according to an embodiment.

Referring to FIG. 3, a first process 302, a second process 304, and a third process 306 may be service processes for executing an application. For example, an application may be executed after an application process 308 is launched following completion of the first process 302, the second process 304, and the third process 306.

Communication may be performed by any two (2) of the first process 302, the second process 304, the third process 306, and the application process 308. For example, the first process 302 and the second process 304 may perform inter-process communication (or IPC ). The first process 302 having a higher priority may not be executed in a standby state until the second process 304 having a lower priority occupies (e.g., is allocated) CPU resources and performs the IPC response. For example, the first process 302 may not be executed during a waiting time (e.g., IPC wait) from when the IPC request signal is transmitted to the second process 304 to when the IPC response signal is received from the second process 304. In other words, priority inversion may occur between the first process 302 and the second process 304 and as a result, execution of the first process 302 may be delayed. The delay in execution of the first process 302 may cause a delay in execution of the third process 306 and generation of the application process 308 to be performed later, and consequently, may delay execution of the application. Therefore, a resource management technology capable of preventing and/or reducing priority inversion may be required.

In the electronic device, various CPU scheduling schemes may be used to perform CPU resource management more efficiently. For example, a real-time scheduling scheme (hereinafter referred to as a "Real-Time scheduling scheme") and a completely fair scheduler (CFS) scheduling scheme may be used in the Linux kernel.

The Real-Time scheduling scheme is based on a real-time scheduler and may allow for preemption of CPU resources based on high priority. The CFS scheduling scheme is based on a CFS scheduler and may be used to fairly allocate CPU resources. The CFS scheduling scheme may be used to allocate CPU resources to processes included in the control group based on CPU resource usage determined for each control group.

Table 1 below is a table illustrating a scheduling policy that may be applied to the Real-Time scheduling scheme or the CFS scheduling scheme.

**[Table 1]**

| **Policy** | **Class** | **Priority** | **Policy Description** |
|---|---|---|---|
| SCHED_FIFO | Real Time | 1~99 | First Come, First Served |
| SCHED_RR | Real Time | 1~99 | Round Robin |
| SCHED_OTHER (SCHED_NORMAL) | Normal | 100~139 | Round Robin |

Referring to Table 1, the scheduling policy may include a SCHED _FIFO policy, a SCHED _RR policy, and a SCHED_OTHER (SCHED_NORMAL) policy.

The SCHED_FIFO policy and the SCHED _RR policy are policies for real-time task and may be classified into a real time class that may be used for the Real-Time scheduling scheme. The SCHED_OTHER (SCHED_NORMAL) policy is a policy for a task having a lower priority than a real-time task and may be classified into a normal class in which a CFS scheduling scheme may be used.

The SCHED _FIFO policy and the SCHED _RR policy may be assigned a higher priority than the SCHED_OTHER (SCHED_NORMAL) policy. The priority may refer to a resource allocation priority or a scheduling priority. In Table 1, with respect to priority, smaller number indicates (or denotes) higher priority. For example, one (1) may represent the highest priority whereas 139 may represent the lowest priority.

The SCHED_FIFO policy may indicate a policy of first allocating CPU resources to a first prepared process based on a 'First Come First Served (or First In First Out) scheme. The SCHED _RR policy and the SCHED_OTHER (SCHED_NORMAL) policy may represent policies that allow processes to use CPU resources in order based on a 'round robin' scheme. When the SCHED _RR policy and the SCHED_OTHER (SCHED_NORMAL) policy are used, each process may yield the CPU resource to the next process after using the CPU resource for an allocated time.

As shown in Table 1, the SCHED_FIFO policy or the SCHED _RR policy may be a policy corresponding to a relatively high priority and may be a policy in which a Real-Time scheduling scheme may be used. The SCHED _OTHER (SCHED_NORMAL) policy may be a policy which corresponds to a relatively low priority or a policy which uses the CFS scheduling scheme.

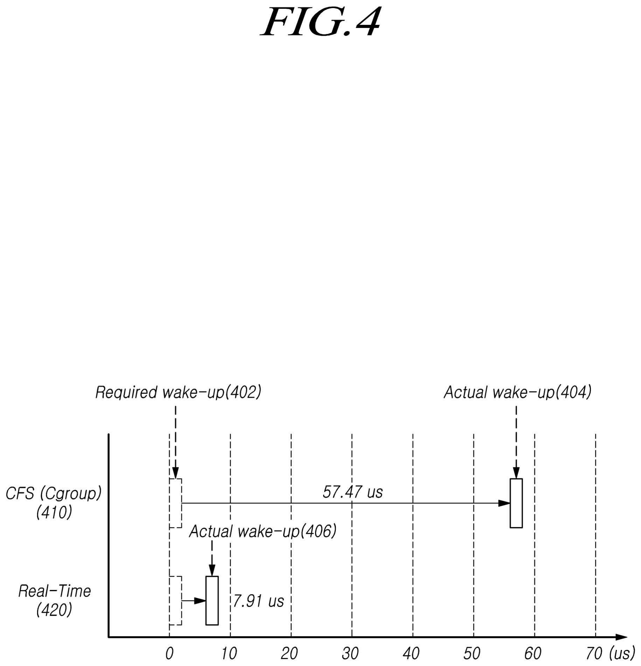

FIG. 4 is a graph illustrating example context switch latency that may occur according to a scheduling scheme according to an embodiment.

Referring to FIG. 4, a context switch latency that may occur if the CFS scheduling scheme 410 is used may be longer than a context switch latency that may occur if the Real-Time scheduling scheme 420 is used.

The context switch latency may refer, for example, to a time delay occurring in the process switching process. For example, the context switch latency may indicate the amount of time it takes for a process to wake up from a standby state (or mode).

According to an example, if the CFS scheduling scheme 410 is used, an actual process wake-up 404 may be performed 57.47us after the required wake-up time 402. Therefore, if the CFS scheduling scheme 410 is used, a context switch latency of 57.47us may occur.

According to an example, if the Real-Time scheduling scheme 420 is used, the actual process wake-up 406 may be performed 7.91us after the required wake-up time 402. Therefore, if the Real-Time scheduling scheme 420 is used, a context switch latency of 7.91us may occur.

The CFS scheduling scheme 410 may prevent or reduce a CPU starvation state from occurring by allowing processes to use CPU resources fairly (e.g., efficiently or better allocate). The CPU starvation state may indicate a state in which a specific process occupies the CPU resource, and thus resulting in another process not being able use the CPU resource. The CFS scheduling scheme 410 may be used for tasks that need to be performed for a long time because it has a relatively long context switch latency and does not always guarantee the use of CPU resources.

The Real-Time scheduling scheme 420 may have a relatively short context switch latency and guarantee CPU resources until the process transitions to sleep state. Therefore, the Real-Time scheduling scheme 420 may be used for a real-time task. The Real-Time scheduling scheme 420 may be used for a short-term (e.g., short time) task because it may cause the CPU starvation state during which time other processes may not have access to CPU resources (e.g., not use the CPU).

The CFS scheduling scheme 410 and the Real-Time scheduling scheme 420 may be used together in one OS. For example, resources may be allocated to processes related to the reproduction of media (e.g., video or audio) based on the Real-Time scheduling scheme 420, thereby guaranteeing CPU usage and preventing and/or reducing disconnection of media reproduction. Resources may be allocated to processes associated with applications executed in the foreground based on the CFS scheduling scheme 410. For example, the application may be executed smoothly by allocating the process to a control group that may use more CPU resources than other processes.

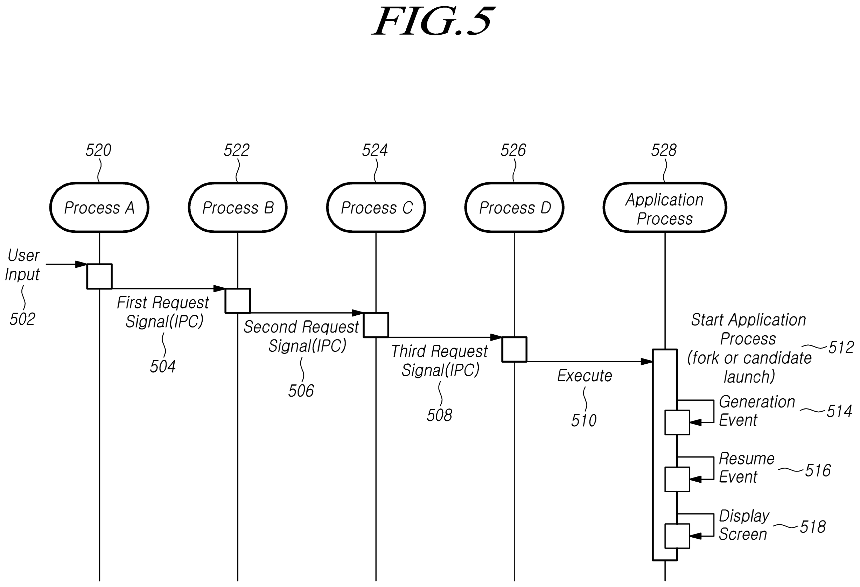

FIG. 5 is a signal flow diagram illustrating an example process of executing an application in an electronic device according to an embodiment.

Referring to FIG. 5, a first application selected by the user, among one or more applications that may be executed in an electronic device, may be associated with one or more services. For example, the first application may be associated with the first to fourth services. The first to fourth services may correspond to process A 520, process B 522, process C 524, or process D 526, respectively. Communication may be performed between any two processes of process A 520, process B 522, process C 524, or process D 526. According to an example, the first application may be executed through sequential operations of process A 520, process B 522, process C 524, process D 526, and an application process 528 in response to a user input. For example, the first application may be executed through the following operations.

In operation 502, process A 520 may receive a user input. According to an example, process A 520 may be associated with a portal application or a home application that enables selecting a first application. According to an example, the user input may be an input for requesting or instructing the electronic device to execute the first application. According to an example, the user input may be a signal received by the electronic device from at least one external electronic device. For example, if the electronic device is a TV, the user input may be a signal corresponding to the key input from the remote control selected by the user or a signal corresponding to the touch input of the user interface (UI) displayed on the screen of a mobile terminal.

In operation 504, process A 520 may transmit a first request signal requesting execution of the first application to process B 522 in response to receiving the user input. According to an example, process B 522 may identify information (e.g., application execution information) related to the first application in response to the first request signal. For example, process B 522 may identify the first application as a web-based application.

In operation 506, process B 522 may transmit a second request signal including information (e.g., application execution information) related to the first application to process C 524. According to an example, process C 524 may perform an operation for executing the first application on a web in response to the second request signal.

In operation 508, when the execution of the corresponding operation is completed, process C 524 may transmit a third request signal requesting execution of the first application to process D 526.

In operation 510, process D 526 may transmit a signal instructing execution or initiation of the first application to the application process 528 in response to the third request signal.

In operation 512, the application process 528 may be started in response to the third request signal. The start of the application process 528 may be performed based on a process fork operation or a candidate launch operation.

According to an example, the process fork operation may include an operation of generating an application process 528 associated with the first application and generating one or more tasks (or threads) by allocating a process identifier (PID) to the generated application process 528. One or more tasks may include a plurality of tasks having a parent-child relationship. According to an example, in operation 514, a generation event may occur in response to the process fork operation being performed. The generation event is an event instructing the generation of the application process 528 and may include a process fork event. The time of occurrence of the generation event may be identified by a start time or a time of generation of the application process 528.

According to an example, if the application process 528 is a process previously forked but stopped, the candidate launch operation may include an operation of resuming (or executing or activating) the application process 528. According to an example, in operation 516, a resume event may occur in response to the candidate launch operation being performed. The time of occurrence of the resume event may be identified a start time of the application process 528.

According to an example, in response to the occurrence of the generation event or the resume event, the first application may be executed, and in operation 518, a screen associated with the first application may be displayed on the electronic device.

According to an example, a nested boosting operation may be performed for quick execution of an application (e.g., the first application of FIG. 5) after cold booting of the electronic device. According to an embodiment, the nested boosting operation may include an operation using at least two scheduling schemes. The at least two scheduling schemes may include a Real-Time scheduling scheme and a CFS scheduling scheme but are not limited thereto.

Hereinafter, for convenience of explanation, the Real-Time scheduling scheme may be referred to as an 'RT policy', and the CFS scheduling scheme may be referred to as a 'Cgroup policy'. Further, the RT policy and the Cgroup policy are described as being included in the scheduling policy representing the CPU scheduling scheme. The RT policy may be a policy corresponding to a higher priority than the Cgroup policy, and the Cgroup policy may be a policy corresponding to a lower priority than the RT policy. Priority may also be referred to as scheduling priority.

In the electronic device, most applications may be quickly executed during an idle time when the CPU is in a stabilizing stage, and the application may be slowly executed during a cold boot time if the CPU is busy. Considering this, the electronic device may perform a nested boosting operation. For example, the electronic device may use the RT policy that may use CPU resources as much as possible when executing the application at idle time, and when the application execution time passes (or exceeds) a predetermined time, the electronic device may use the Cgroup policy that is more stable than the RT policy. Therefore, if the nested boosting operation is performed, it may be possible to secure necessary CPU resources.

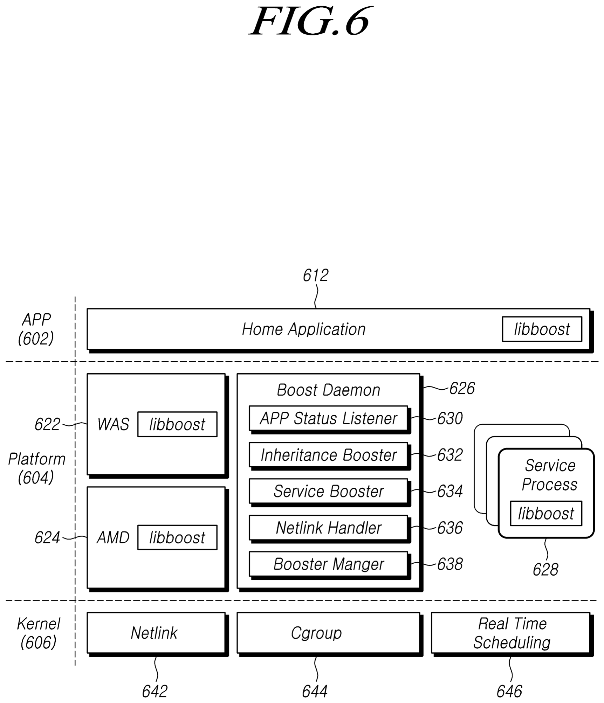

FIG. 6 is a diagram illustrating an example system structure for managing CPU resources of an electronic device according to an embodiment.

Referring to FIG. 6, a system for managing CPU resources of an electronic device may include an application 602, a platform 604, and a kernel 606.

The application 602, which may be referred to as an app (or APP), may be associated with a service. The application 602 may include a software program executed by the user's selection. According to an example, the application 602 may be executed by the user's selection using at least one external electronic device or a remote control device (e.g., a remote control). According to an example, the application 602 may be executed based on the OS and may or may not be displayed on the screen of the electronic device. The application 602 may provide various services such as media playback. According to an example, the application 602 may include a home application 612 displayed on the screen of the electronic device after cold booting. According to an example, the home application 612 may be an application that provides a UI for at least one of selection of an application to be executed, a website search, a broadcast channel selection, or an external electronic device connection. According to an example, an application (e.g., a first application of FIG. 5) selected by the user may be identified based on an event provided from the home application 612.

The platform 604 may be associated with the OS and may provide an environment for executing application 602. The platform 604 may access a hardware through the kernel 606 and may perform control group allocation, control group change or movement, CPU resource allocation or management, or process management operations associated with the service. According to an example, the platform 604 may include a web application service (WAS) 622, an application management demon (AMD) 624, a boost daemon (or a boost module) 626, and a service process (or process) 628.

The WAS 622 may perform an operation for providing a web-based application service. The AMD 624 may manage the execution of the application 602 and the life cycle of the application 602.

The boost daemon 626 may control a scheduling policy based on an event associated with a process received from the kernel 606 or may perform CPU scheduling or CPU resource management. According to an example, the boost daemon 626 may include an app status listener 630, an inheritance booster 632, a service booster 634, a netlink handler 636, and a booster manager 638.

The app status listener 630 may receive an event (e.g., an application execution event) associated with the lifecycle of the application 602.

The inheritance booster 632 may perform an operation for priority inheritance between processes having different priorities. For example, the inheritance booster 632 may request the booster manager 638 to set (or change) a scheduling policy for a low-priority process to inherit the priority of a high-priority process.

The service booster 634 may manage CPU resource allocation of the service process 628.

The netlink handler 636 may receive events associated with the lifecycle of the process (e.g., process fork events, process execution events, or process exit events) from the netlink 642 of the kernel 606.

The booster manager 638 may set (or change) scheduling policy settings, control group allocation, resource allocation ratio determination, or CPU resource allocation priorities. According to an example, the booster manager 638 may set or change a scheduling policy for a low-priority process to inherit the priority of the high-priority process in response to a request from the inheritance booster 632.

The service process 628 may be a process operating in the background without a UI and may provide functions necessary for the operation of the UI application. For example, the service process 628 may include process B 522, process C 524, and process D 526 corresponding to the second to fourth services associated with the first application of FIG. 5. According to an example, state information about an application process (e.g., the application process 528 of FIG. 5) may be identified based on the service process 628. The state information about the application process may include, e.g., information indicating any one of create, resume, focus, pause, or exit.

The kernel 606 may manage hardware and provide services necessary for the platform 604. The kernel 606 may include a netlink 642, a Cgroup 644, and a real-time scheduling unit 646.

The netlink 642 may provide an event associated with the lifecycle of the service process 628 (e.g., a process fork event, a process execution event, a process resume event, or a process exit event). The Cgroup 644 may provide a CPU resource distribution function. According to an example, the Cgroup 644 may perform a CPU resource distribution function for each of the set one or more control groups. The real-time scheduling unit 646 may perform real-time scheduling for preempting CPU resources.

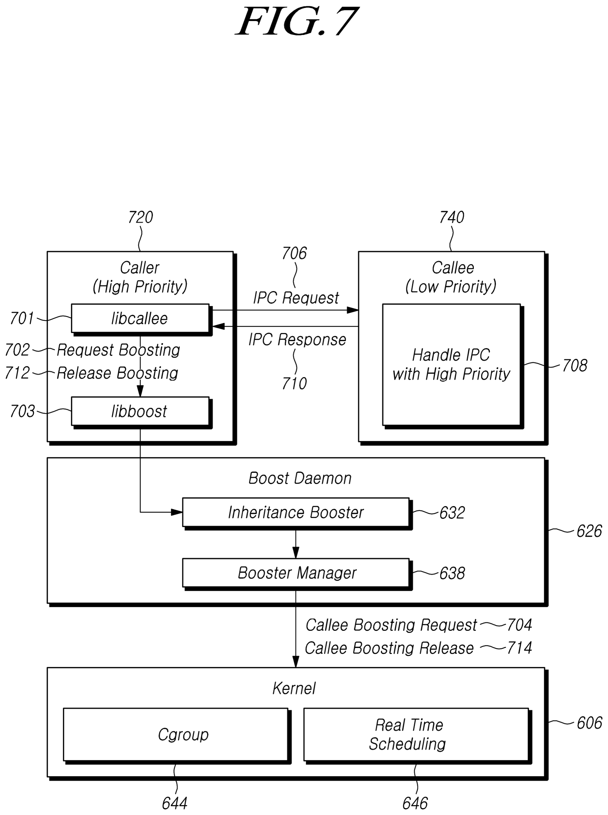

In the system illustrated in FIG. 6, a priority inheritance operation may be performed so that priority inversion does not occur between processes. For example, the priority inheritance operation may be performed as illustrated and described in greater detail below with reference to FIG. 7.

FIG. 7 is a diagram illustrating an example priority inheritance operation between processes performed in an electronic device according to an embodiment.

Referring to FIG. 7, the priority inheritance operation may be applied to communication between processes performed at a predetermined time. According to an example, the processes may be processes associated with an application to be executed and on which IPC is performed. For example, if the application to be executed is the first application of FIG. 5, the processes that may be selected or assigned are process B 522 and process C 524 of FIG. 5 or process C 524 and process D 526 of FIG. 5.

According to an example, among the processes, the first process 720 (e.g., process B 522 or process C 524 of FIG. 5) may be referred to as a caller or IPC transmission process. According to an example, among the processes, the second process 740 (e.g., process C 524 or process D 526 of FIG. 5) may be referred to as a callee or IPC reception process. Hereinafter, the first process 720 is referred to as a caller and the second process 740 is referred to as callee, but the terms referring to the first process 720 and the second process 740, respectively, are not limited thereto and may be variously changed.

According to an example, the caller 720 may have a relatively higher scheduling priority than the callee 740, and the callee 740 may have a relatively lower scheduling priority than the caller 720. The callee 740 may have previously registered as a priority inheritance target process. For example, the callee 740 may request the boost daemon 626 to register the callee 740 as a priority inheritance target process using a registration-related application programming interface (API). The callee 740 may call a set API if it is called more than a threshold number of times for execution of one or more applications after performing a cold boot. The boost daemon 626 may register the callee 740 as a priority inheritance target process in response to the request of the callee 740.

In operation 701, the caller 720 may call a first library 701 (hereinafter referred to as a "libcallee") corresponding to the callee 740.

In operation 702, if the callee 740 has already been registered as a priority inheritance target process, the first library may request the callee 740 to be boosted. According to an example, the boosting may include an operation of changing a scheduling policy to have a higher scheduling priority or an operation of inheriting the higher scheduling priority. According to an example, the boosting request may be provided to the boost daemon 626 through the second library (hereinafter, referred to as a "libboost") 703. According to an example, if the callee 740 is registered as a priority inheritance target process and the scheduling priority of the callee 740 is lower than the scheduling priority of the caller 720, the boosting request may be provided to the boost daemon 626. According to an example, the boosting request may include information about the scheduling priority of the caller 720 or information about the scheduling policy applied to the caller 720.

The inheritance booster 632 of the boost daemon 626 may receive a boosting request provided from the caller 720. In response to receiving the boosting request, the inheritance booster 632 may request the booster manager 638 to perform an operation (e.g., or the inheritance of the scheduling priority of the caller 720 or the scheduling policy) for boosting the callee 740.

In response to the request of the inheritance booster 632, the booster manager 638 may set or change the scheduling policy of the caller 720 so that the scheduling priority of the caller 720 is inherited to the callee 740 (or the scheduling policy applied to the caller 720 is inherited to the callee 740). For example, if the Cgroup policy is set (e.g., configured or changed) for the callee 740, the booster manager 638 may set (e.g., configure or change) an RT policy for the callee 740 to release the Cgroup policy and have the same scheduling priority as the caller 720. According to an example, the RT policy may be a scheduling policy applied to the caller 720.

In operation 704, the booster manager 638 may provide information about the scheduling policy set for the callee 740 to the kernel 606. In the kernel 606, resource allocation by the Cgroup 644 or the real-time scheduling unit 646 may be performed based on the scheduling policy set for the callee 740. For example, if the set scheduling policy is an RT policy, the real-time scheduling unit 646 may preempt the CPU resources and allocate them to the callee 740.

In operation 706, the caller 720 may transmit an IPC request to the callee 740.

In operation 708, the callee 740 may process an IPC request with a higher scheduling priority based on boosting.

In operation 710, the callee 740 may transmit an IPC response to the caller 720 in response to processing the IPC request.

In operation 712, the caller 720 may request the callee 740 to release boosting. According to an embodiment, the boosting release request may be provided to the boost daemon 626 through the libboost 703.

The inheritance booster 632 of the boost daemon 626 may receive a boosting release request provided from the caller 720. In response to receiving the boosting release request, the inheritance booster 632 may request the booster manager 638 to perform an operation (e.g., release of the inheritance of the scheduling priority of the caller 720 or the scheduling policy) for the boosting release of the callee 740.

In response to the request of the inheritance booster 632, the booster manager 638 may determine whether a timeout event associated with the priority inheritance operation occurs. According to an example, the timeout event may occur a specified time after priority inheritance is performed.

In response to the occurrence of the timeout event, the booster manager 638 may change (or update) the scheduling policy of the callee 740 so that the scheduling priority inherited to the caller 720 is released (or the scheduling policy inherited to the caller 720 is released). For example, the booster manager 638 may release the RT policy set for the callee 740 and set the Cgroup policy corresponding to the low scheduling priority for the callee 740. According to an example, the Cgroup policy may be a scheduling policy previously set for the callee 740.

In operation 714, the booster manager 638 may provide information about the set scheduling policy to the kernel 606. In the kernel 606, resource allocation by the Cgroup 644 or the real-time scheduling unit 646 may be performed based on the scheduling policy set for the callee 740. For example, if the scheduling policy set for the callee 740 is a Cgroup policy, the kernel 606 may allocate CPU resources to the callee 740 based on the resource allocation ratio corresponding to the control group including the callee 740.

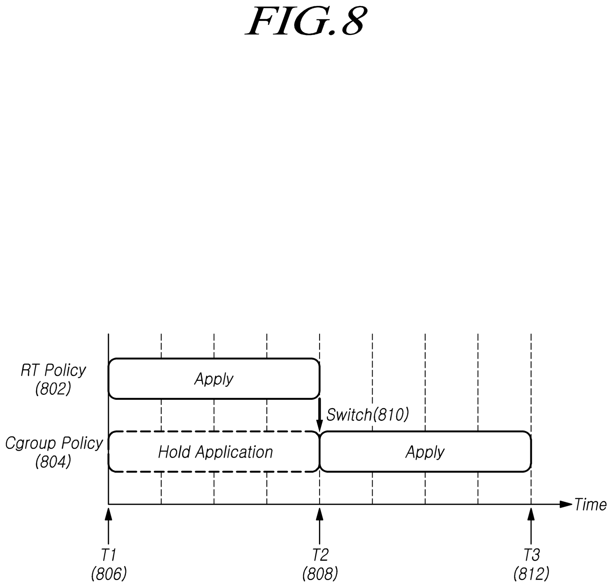

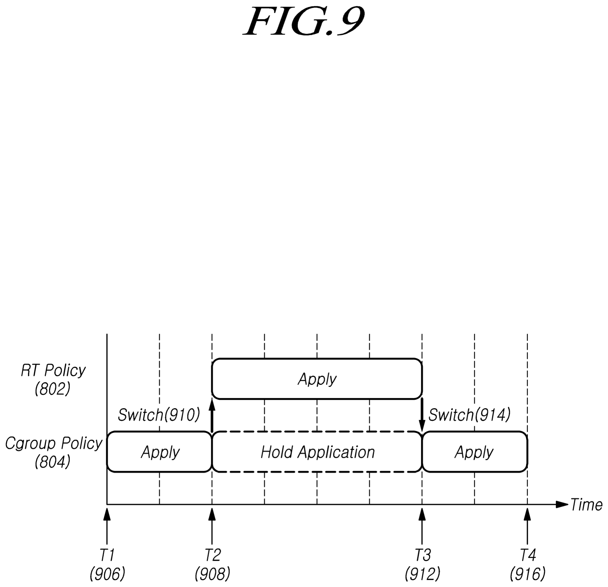

According to an example, the nested boosting operation using the RT policy and the Cgroup policy may be performed when an application process is generated or in association with a priority inheritance operation. A related operation is described in greater detail below with reference to FIGS. 8 and 9.

FIG. 8 is a graph illustrating an example in which a nested boosting operation is performed, according to an embodiment.

Referring to FIG. 8, the electronic device may perform a nested boosting operation in response to the generation of an application process (e.g., the application process 528 of FIG. 5). According to an example, the electronic device may identify that an application process is generated based on the occurrence of a process fork event associated with the application.

The electronic device may first apply the RT policy 602 corresponding to a relatively high scheduling priority of the RT policy 802 and the Cgroup policy 804 that may be used for the nested boosting operation to the application process. For example, the RT policy 802 may be applied to the application process for a time period from the time of T1 806, when the application process is generated, to the time of T2 808, when the set time elapses. While the RT policy 802 is applied, the Cgroup policy 804 may not be applied to the application process.

The electronic device may switch (810) the scheduling policy to be applied to the application process at the time of T2 808 when the application of the RT policy 802 is completed. For example, the electronic device may switch (810) the scheduling policy from the RT policy 802 to the Cgroup policy 804 at time T2 808. In other words, from time T2 808, the electronic device may apply a Cgroup policy 804 having higher stability than the RT policy 802 to the application process. The Cgroup policy 804 may be applied from time T2 808 to the end of the application process or for a time period from time T2 608 to time T3 812 after the defined time elapses.

FIG. 9 is a graph illustrating another example in which a nested boosting operation is performed according to an embodiment.

Referring to FIG. 9, the electronic device may perform a nested boosting operation on a second process (e.g., caller 720 in FIG. 7) that may communicate with a first process (e.g., caller 720 in FIG. 7) having a relatively high scheduling priority. The second process may have a lower scheduling priority than the first process.

According to an example, the electronic device may apply a Cgroup policy 804 to the second process from time T1 906 to time T2 908 when the second process is generated. According to an example, the second process may inherit the scheduling priority of the first process at the time of T2 908. At time T2 908, the electronic device may switch (910) a scheduling policy to be applied to the second process. For example, the electronic device may switch (910) the scheduling policy from the Cgroup policy 804 to the RT policy 802 at the time of T2 908.

The electronic device may apply the RT policy 802 to the second process from time T2 908 to time T3 912 after the first time elapses. While the RT policy 802 is applied, the Cgroup policy 804 may not be applied to the second process.

The electronic device may switch (914) the scheduling policy from the RT policy 802 to the Cgroup policy 804 at time T3 912 when the priority inheritance operation is completed. The Cgroup policy 804 may be applied during a time period from time T3 912 to the end of the second process or from time T3 912 to time T4 916 after the second time elapse. According to an example, the first time and the second time may be predetermined and may be the same or different.

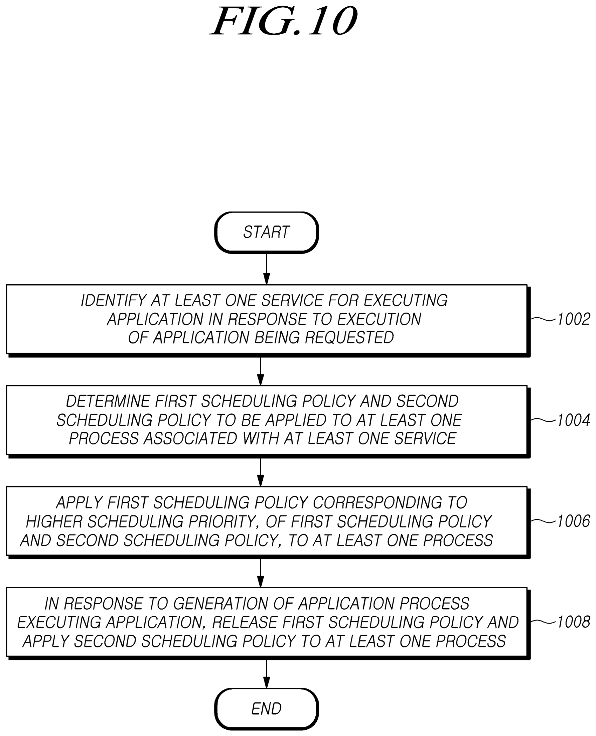

FIG. 10 is a flowchart illustrating an example resource management operation of an electronic device according to an embodiment.

Referring to FIG. 10, in operation 1002, in response to the request for execution of the application, at least one service for execution of the application may be identified.

In operation 1004, the electronic device may determine a first scheduling policy and a second scheduling policy to be applied to at least one process associated with at least one service. According to an example, the at least one process may be at least one process (e.g., an application execution authority check process or a security-related process) that performs a task related to the execution of an application. According to an example, at least one process may be referred to as an assist process, and delay in the operation may affect the start performance of the application. According to an example, at least one process may be used to execute a plurality of applications. According to an example, the first scheduling policy and the second scheduling policy may be used for a nested boosting operation for at least one process.

In operation 1006, the electronic device may apply a first scheduling policy corresponding to a higher scheduling priority of the first scheduling policy and the second scheduling policy to at least one process.

In operation 1008, in response to the generation of the application process for executing the application, the electronic device may release the first scheduling policy and apply the second scheduling policy to at least one process. According to an example, the generation of the application process may be identified based on the occurrence of a generation event (e.g., a process fork event) indicating the generation of the application process.

According to an example, when at least one process is used by a plurality of applications, information for a nested boosting operation of at least one process (e.g., the first scheduling policy and the second scheduling policy) may be managed as common configuration information for a plurality of applications, and other information for each application may be managed as separate configuration information. Separate configuration information may be provided using a file or API that is distinguished from common configuration information.

According to an example, the first scheduling policy may include a policy (e.g., an RT policy) that first allocates a first resource to at least one process. According to an example, the second scheduling policy may include a policy (e.g., a Cgroup policy) for allocating a second resource to at least one process based on a set resource allocation ratio. The set resource allocation ratio may correspond to at least one control group including at least one process among a plurality of control groups.

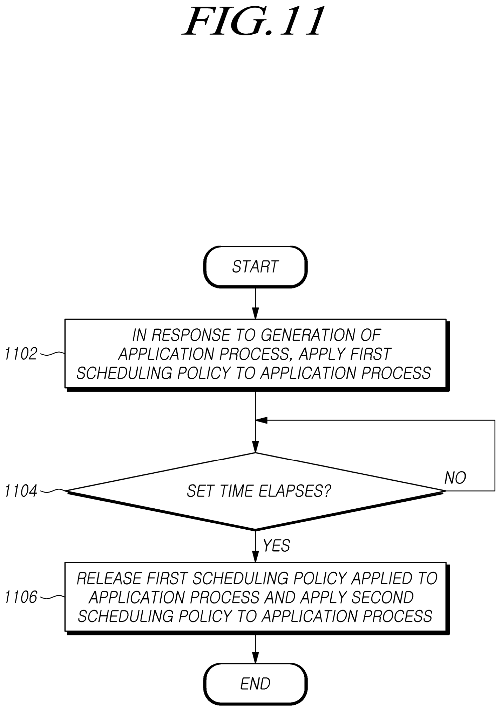

FIG. 11 is a flowchart illustrating an example nested boosting operation applied to an application process according to an embodiment.

In operation 1102, the electronic device may apply a first scheduling policy (e.g., RT policy) to the application process in response to the application process being generated. According to an example, operation 1102 may be performed following operation 1008 of FIG. 10 or may be performed in parallel with operation 1008.

In operation 1104, the electronic device may determine whether a defined time has elapsed from the time when the first scheduling policy was applied to the application process. According to an example, the defined time may be N seconds (e.g., five (5) seconds) if the application process is related to the first execution of the application, and M seconds (e.g., two (2) seconds) if the application process is related to the restart of the application. Here, N may represent a time (or duration) equal to or larger than M. The defined time may be set in a predetermined format (e.g., JavaScript object notation (Json)) as a timeout value. The defined time may be included in a specific file (e.g., a manifator file) and may be set (e.g., configured or programmed) equally or differently for each application.

In operation 1106, the electronic device may release the first scheduling policy applied to the application process in response to the lapse (or expiration) of the defined time from the time when the first scheduling policy is applied to the application process and apply the second scheduling policy (e.g., a Cgroup policy) to the application process.

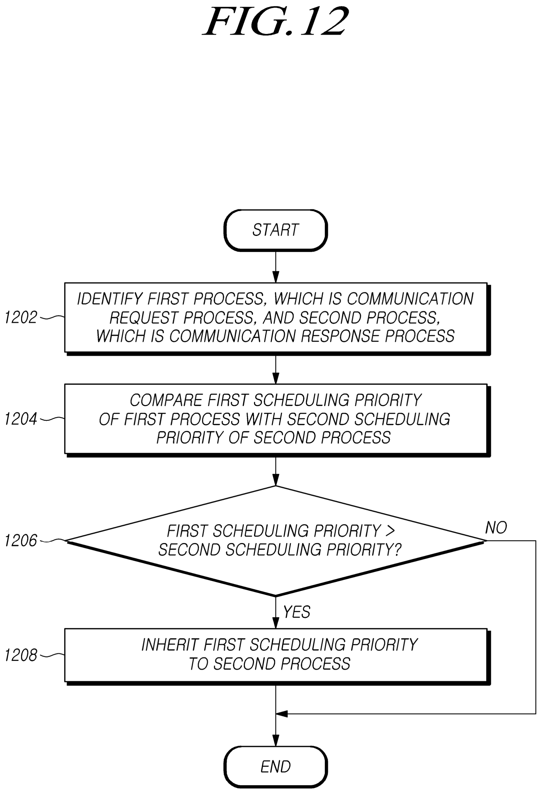

FIG. 12 is a flowchart illustrating an example priority inheritance operation between a first process and a second process according to an embodiment.

Referring to FIG. 12, in operation 1202, the electronic device may identify a first process, which is a communication request process among the processes, and a second process, which is a communication response process among the processes, in response to the need for communication between processes at a predetermined time. According to an example, the first process may correspond to an application process (e.g., the application process 528 of FIG. 5), and the second process may correspond to at least one process (e.g., process B 522, process C 524, and process D 526) associated with the at least one service.

In operation 1204, the electronic device may compare the first scheduling priority of the first process with the second scheduling priority of the second process.

In operation 1206, the electronic device may determine whether the first scheduling priority is higher than the second scheduling priority.

In operation 1208, the electronic device may inherit the first scheduling priority to the second process in response to the first scheduling priority being higher than the second scheduling priority. According to an example, the second process may be registered as a priority inheritance target process. According to the example, the electronic device may apply the scheduling policy (e.g., the RT policy) applied to the first process to the second process in order to inherit the first scheduling priority to the second process.

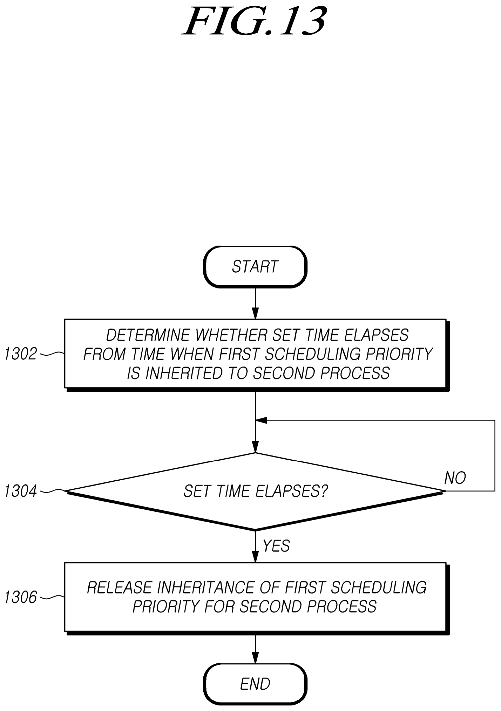

FIG. 13 is a flowchart illustrating an example operation of releasing priority inheritance between a first process and a second process according to an embodiment.

Referring to FIG. 13, in operation 1302, the electronic device may determine whether a defined time has elapsed (or expired) from the time when the first scheduling priority has inherited to the second process. According to an example, operation 1302 may be performed following operation 1208 of FIG. 12.

In operation 1304, the electronic device may perform operation 1302 again in response to a defined time not elapsing (e.g., time remaining) from the time when the first scheduling priority is inherited to the second process.

In response to the lapse of the defined time from the time when the first scheduling priority is inherited to the second process in operation 1304, the electronic device may release the inheritance of the first scheduling priority for the second process in operation 1306.

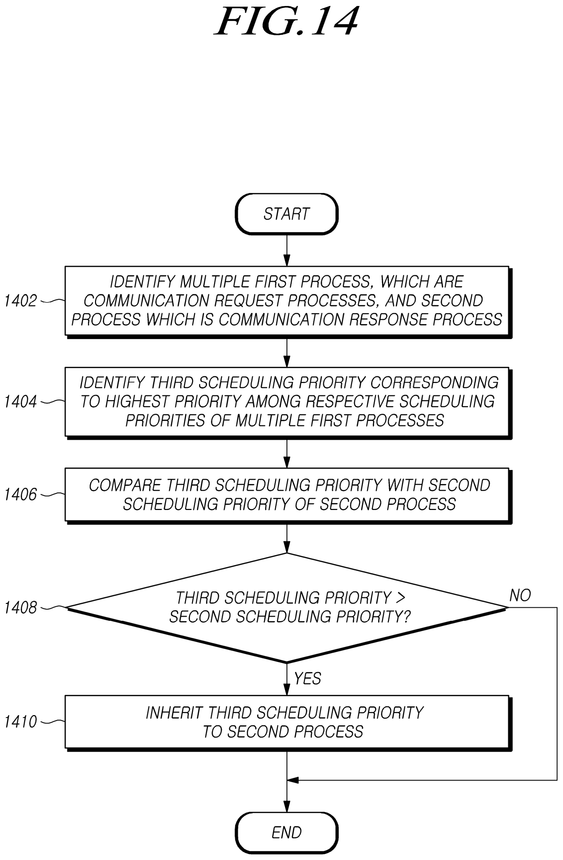

FIG. 14 is a flowchart illustrating an example priority inheritance operation between a plurality of first processes and a second process according to an embodiment.

Referring to FIG. 14, in operation 1402, the electronic device may identify a plurality of first processes, which are communication request processes among the processes, and a second process, which is a communication response process among the processes, in response to the need for communication between the processes at a predetermined time.

In operation 1404, the electronic device may identify a third scheduling priority corresponding to the highest priority among the respective scheduling priorities of the plurality of first processes.

In operation 1406, the electronic device may compare the third scheduling priority with the second scheduling priority of the second process.

In response to the third scheduling priority being higher than the second scheduling priority in operation 1408, the electronic device may inherit the third scheduling priority to the second process in operation 1410.

The electronic device may terminate all the operations in response to the third scheduling priority not being higher than the second scheduling priority in operation 1408.

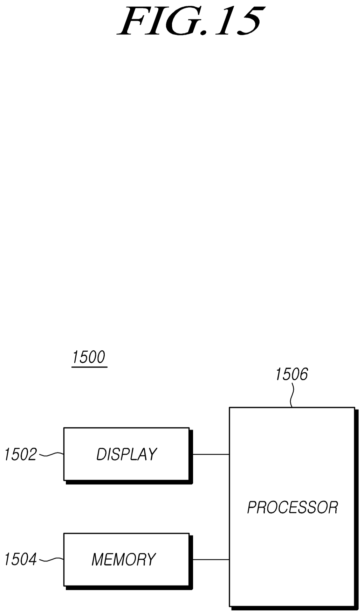

FIG. 15 is a block diagram illustrating an example configuration of an electronic device according to an embodiment.

Referring to FIG. 15, the electronic device 1500 may include a display 1502, memory 1504, and a processor (e.g., including processing circuitry) 1506. According to an example, the electronic device 1500 may include an additional component (e.g., a first communication unit (e.g., including communication circuitry) for performing communication with an external electronic device or a second communication unit (e.g., including communication circuitry) for performing communication with a remote control device), or may omit at least one of the illustrated components.

According to an example, the display 1502 may perform various display operations according to functions of the electronic device 1500. For example, the display 1502 may display at least one of various pieces of service information, media information, text information, or broadcast information according to the execution of the application.

According to an example, the memory 1504 may store various pieces of information or data related to an operation of the electronic device 1500 and may store at least one program.

According to an example, the processor 1506 may include various processing circuitry and is electrically connected to each of the display 1502 and the memory 1504 and may execute at least one instruction of the program stored in the memory 1504. One or more processors 1506 may be provided and may perform the operations of the electronic device 1500 described above. For example, the processor 1506 may perform the operations illustrated below. The processor 1506 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an example, the processor 1506 may identify at least one service associated with the application in response to execution of the application being requested. The processor 1506 may determine a first scheduling policy (e.g., an RT policy) and a second scheduling policy (e.g., a Cgroup policy) to be applied to at least one process associated with at least one service. The processor 1506 may apply a first scheduling policy corresponding to a higher scheduling priority of the first scheduling policy and the second scheduling policy to at least one process. The processor 1506 may release the first scheduling policy and apply the second scheduling policy to at least one process in response to the generation of an application process for executing an application.

According to an example, the processor 1506 may apply the first scheduling policy to the application process in response to the generation of the application process. The processor 1506 may release the first scheduling policy applied to the application process and apply the second scheduling policy to the application process in response to the lapse of a defined time after the first scheduling policy is applied to the application process.

According to an example, the processor 1506 may identify a first process, which is a communication request process among the processes, and a second process, which is a communication response process among the processes, in response to the need for communication between processes at a predetermined time. The processor 1506 may compare the first scheduling priority of the first process with the second scheduling priority of the second process and inherit the first scheduling priority to the second process in response to the first scheduling priority being higher than the second scheduling priority.

According to an example, the first process may correspond to an application process, and the second process may correspond to at least one process.

According to an example, the processor 1506 may determine whether a defined time has elapsed or expired from the time when the first scheduling priority was inherited to the second process, and in response to the lapse of the defined time, may release the inheritance of the first scheduling priority for the second process.

According to an example, the first scheduling priority may be determined to first allocate the first resource to the first process based on the first scheduling policy. According to an example, the second scheduling priority may be determined to allocate a second resource corresponding to a set resource allocation ratio to the second process based on the second scheduling policy.

According to an example, the second process may be registered as a priority inheritance target process.

According to an example, in response to identification of a plurality of first processes, the processor 1506 may identify a third scheduling priority corresponding to the highest priority among the respective scheduling priorities of the first processes and compare the third scheduling priority with the second scheduling priority of the second process. The processor 1506 may inherit the third scheduling priority to the second process in response to the third scheduling priority being higher than the second scheduling priority.

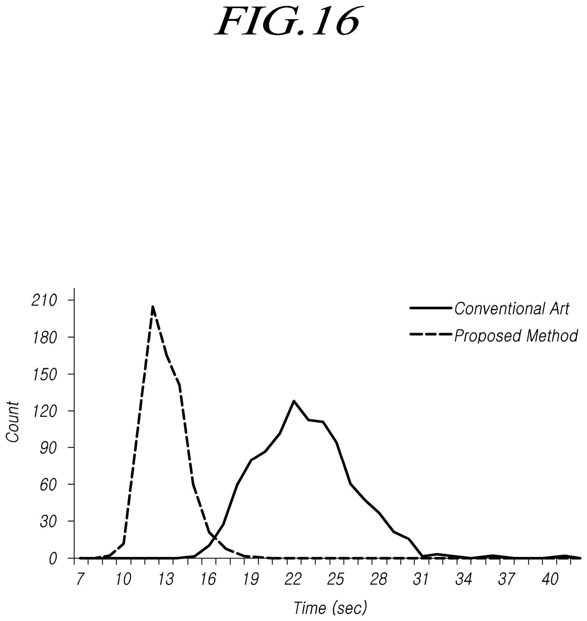

FIG. 16 is a graph illustrating execution performance of application A according to an embodiment.

In the graph of FIG. 16, the horizontal axis denotes the app execution time (sec), and the vertical axis denotes the number of tests (count). The application execution time may indicate a time from when the user's input related to application execution is received to the time when the application is executed.

In FIG. 16, the dashed line graph denotes the execution performance of application A when the above-described method, according to various embodiments (hereinafter referred to as "disclosed method"), is applied, and the solid line graph denotes the execution performance of the conventional application A.

Referring to FIG. 16, as a result of repeated testing by executing application A 1000 times after cold booting in the electronic device, the average app execution time of the disclosed method is reduced from 22 seconds to 12 seconds, enhancing the average execution performance and the variance from 3.28 to 1.48.

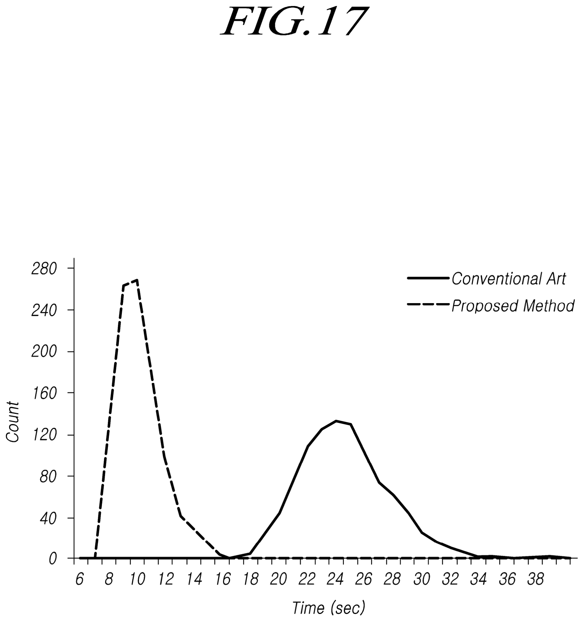

FIG. 17 is a graph illustrating execution performance of application B according to an embodiment.

The graph of FIG. 17 shows the execution performance of application B different from that of application A. If the disclosed method is applied to application B, execution performance may be enhanced similar to that of application A.

Referring to FIG. 17, as a result of repeated testing by executing application B 1000 times after cold booting in the electronic device, the average app execution time of the disclosed method is reduced from 22 seconds to 9.7 seconds, thereby enhancing the average execution performance and the variance from 3.17 to 1.55. As a result, if the disclosed method is used, the execution performance of the application after cold booting may be enhanced.

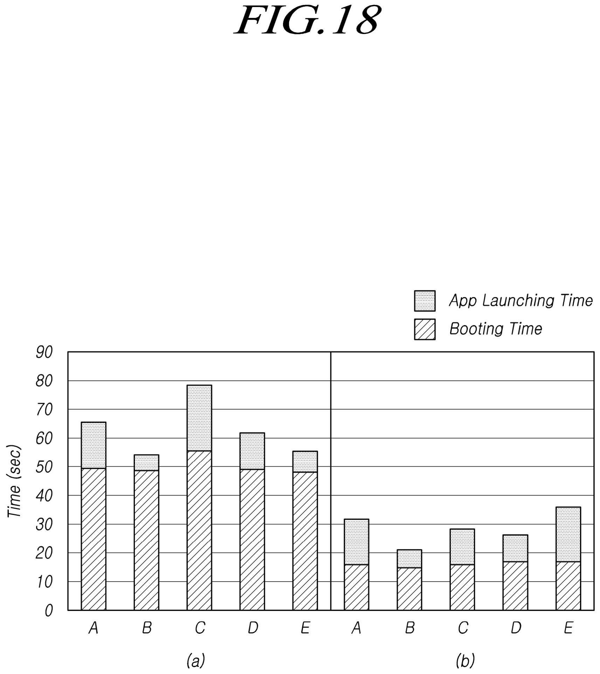

FIG. 18 is a graph illustrating booting performance and application execution performance according to an embodiment.

In the graph of FIG. 18, the horizontal axis denotes applications (e.g., applications A to E), and the vertical axis denotes the sum of the cold booting time and the app execution time. The cold booting time may indicate a time from when power is applied to the electronic device to the time when the booting is completed so that the screen is first displayed. The cold booting time may be associated with the booting performance. The application execution time may indicate a time from cold booting to execution of an application and may be related to application execution performance.

FIG. 18 shows the sum of the cold booting time and the app execution time according to the conventional art at (a), for each of applications A to E. FIG. 18 shows the sum of the cold booting time and the app execution time according to the disclosed method, for each of applications A to E at (b). Comparing (a) of FIG. 18 with (b) of FIG. 18, it may be identified that according to the disclosed method, the booting performance and the application execution performance are better than the conventional art.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element. As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device, comprising:
memory storing at least one program; and
at least one processor, comprising processing circuitry, electrically connected to the memory and configured to execute at least one instruction of a program stored in the memory, wherein at least one processor, individually and/or collectively, is configured to:
in response to execution of an application being requested, identify at least one service associated with the application;
determine a first scheduling policy and a second scheduling policy to be applied to at least one process associated with the at least one service;
apply the first scheduling policy corresponding to a higher scheduling priority, of the first scheduling policy and the second scheduling policy, to the at least one process; and
in response to generation of an application process executing the application, release the first scheduling policy and apply the second scheduling policy to the at least one process.

2. The electronic device of claim 1, wherein the first scheduling policy includes a policy preferentially allocating a first resource to the at least one process,
wherein the second scheduling policy includes a policy allocating a second resource to the at least one process based on a set resource allocation ratio, and
wherein the set resource allocation ratio corresponds to at least one control group including the at least one process among a plurality of control groups.

3. The electronic device of claim 1, wherein at least one processor, individually and/or collectively, is configured to:
in response to the generation of the application process, apply the first scheduling policy to the application process; and
in response to a lapse of a set time from a time when the first scheduling policy is applied to the application process, release the first scheduling policy applied to the application process and apply the second scheduling policy to the application process.

4. The electronic device of claim 1, wherein at least one processor, individually and/or collectively, is configured to:
in response to a need for communication between processes at a specified time, identify a first process, including a communication request process, and a second process, including a communication response process;
compare a first scheduling priority of the first process with a second scheduling priority of the second process; and
inherit the first scheduling priority to the second process in response to the first scheduling priority being higher than the second scheduling priority.

5. The electronic device of claim 4, wherein the first process corresponds to the application process, and the second process corresponds to any one of the at least one process.

6. The electronic device of claim 4, wherein at least one processor, individually and/or collectively, is configured to:
determine whether a set time elapses from a time when the first scheduling priority is inherited to the second process; and
release the inheritance of the first scheduling priority for the second process in response to the lapse of the set time.

7. The electronic device of claim 4, wherein the first scheduling priority is determined to preferentially allocate a first resource to the first process based on the first scheduling policy, and
wherein the second scheduling priority is determined to allocate a second resource corresponding to a set resource allocation ratio to the second process based on the second scheduling policy.

8. The electronic device of claim 4, wherein the second process is registered as a priority inheritance target process.

9. The electronic device of claim 4, wherein at least one processor, individually and/or collectively, is configured to:
in response to identifying a plurality of first processes, identify a third scheduling priority corresponding to a highest priority among respective scheduling priorities of the first processes;
compare the third scheduling priority with the second scheduling priority of the second process; and
inherit the third scheduling priority to the second process in response to the third scheduling priority being higher than the second scheduling priority.

10. A method for managing a resource by an electronic device, the method comprising:
in response to execution of an application being requested, identifying at least one service associated with the application;
determining a first scheduling policy and a second scheduling policy to be applied to at least one process associated with the at least one service;
applying the first scheduling policy corresponding to a higher scheduling priority, of the first scheduling policy and the second scheduling policy, to the at least one process; and
in response to generation of an application process executing the application, releasing the first scheduling policy and applying the second scheduling policy to the at least one process.

11. The method of claim 10, wherein the first scheduling policy includes a policy preferentially allocating a first resource to the at least one process,
wherein the second scheduling policy includes a policy allocating a second resource to the at least one process based on a set resource allocation ratio, and
wherein the set resource allocation ratio corresponds to at least one control group including the at least one process among a plurality of control groups.

12. The method of claim 10, further comprising:
in response to the generation of the application process, applying the first scheduling policy to the application process; and
in response to a lapse of a set time from a time when the first scheduling policy is applied to the application process, releasing the first scheduling policy applied to the application process and applying the second scheduling policy to the application process.

13. The method of claim 10, further comprising:
in response to a need for communication between processes at a specified time, identifying a first process, including a communication request process, and a second process, including a communication response process;
comparing a first scheduling priority of the first process with a second scheduling priority of the second process; and
inheriting the first scheduling priority to the second process in response to the first scheduling priority being higher than the second scheduling priority.

14. The method of claim 13, further comprising:
determining whether a set time elapses from a time when the first scheduling priority is inherited to the second process; and
releasing the inheritance of the first scheduling priority for the second process in response to the lapse of the set time.

15. The method of claim 13, further comprising:
in response to identifying a plurality of the first processes, identifying a third scheduling priority corresponding to a highest priority among respective scheduling priorities of the first processes;
comparing the third scheduling priority with the second scheduling priority of the second process; and
inheriting the third scheduling priority to the second process in response to the third scheduling priority being higher than the second scheduling priority.
